## Europäisches Patentamt
## European Patent Office
## Office européen des brevets

(19)

(11) Publication number: **0 014 097**
**B1**

(12) **EUROPEAN PATENT SPECIFICATION**

(45) Date of publication of patent specification: **20.07.83**

(51) Int. Cl.³: **B 60 B 21/12**

(21) Application number: **80300210.4**

(22) Date of filing: **23.01.80**

(54) Wheel rim and obstructor band therefor.

(30) Priority: **29.01.79 GB 7902989**

(43) Date of publication of application:
**06.08.80 Bulletin 80/16**

(45) Publication of the grant of the patent:
**20.07.83 Bulletin 83/29**

(84) Designated Contracting States:
**AT BE CH DE FR GB IT LU NL SE**

(56) References cited:
**FR - A - 384 680**
**FR - A - 2 256 847**
**FR - A - 2 259 707**
**FR - A - 2 298 447**
**FR - A - 358 283**
**GB - A - 628 237**
**US - A - 4 122 882**

(73) Proprietor: **TSB INTERNATIONAL N.V.**
**Middenstraat 4, P.O. 840**
**Curacao Netherlands Antilles (NL)**

(72) Inventor: **Wilkinson, Terence Henry Tyrell**
**4 Richmond Rise**
**Wokingham, Berkshire (GB)**
Inventor: **Cadman, Philip Thomas Hubert**
**21 Swan Street, Kingsclere**
**Newbury, Berkshire (GB)**

(74) Representative: **Harrison, David Christopher et al,**
**MEWBURN ELLIS & CO 2/3 Cursitor Street**
**London EC4A 1BQ (GB)**

Courier Press, Leamington Spa, England

Wheel rim and obstructor band therefor

This invention relates to wheel rims such as disclosed in FR—A—2 256 847 and like that the invention is concerned with the prevention of the consequences which might arise from loss of air pressure when a vehicle with a pneumatic tyre is travelling at speed. This loss might otherwise cause the tyre to fall from the rim which in turn causes disastrous loss of steering control.

There have been previous proposals in the 1920's and 1930's detachable bands or fillers which acted as seats for the tyre beads when in their normal running position — see e.g. FR—A—384680. There were also proposals for safety obstructors for wells of vehicles rims which were directed to problems which arose specifically when a tyre had an innertube. These latter solutions, examples of which are seen in U.K. patents No. 222768 and 241120 were however quite impractical for the tubeless tyres which became commercially available from the late 1940's. In order to deal with the safety problems for which tubeless tyres give rise prior proposals have been seen for example in United Kingdom Patent No. 1420622 and 1488871 where the difficulties arising from the necessity for preventing the formation of any leak paths through the rim were solved at the same time as the provision of an obstructor for the well which was independent of the state of inflation at the time or even of the presence of a tyre on the rim, was strong and was well adapted to resist the high speeds which were and are current. However neither of these prior proposals was intended for use with tubed tyres because it could not realistically be assembled to allow a normal valve of a tubed tyre to project through the well so as to pass to the inner periphery of the rim where it would have to be accessible for inflation. In practical terms they are restricted to use with and in rims for tubeless tyres.

In prior dated U.K. applications published after the priority date of this invention we have provided a wheel rim which is equipped with a well obstructor which is in principle usable either for a tubed or a tubeless tyre. A common feature of these two proposals is that a portion of the band-like element itself is cranked to provide a comparatively short inset portion offering access to the valve aperture in the well and which lay on or close to the base of the well. This cranking was performed on the material of the band itself i.e. on the material which extended in cylindrical fashion around the well.

In the present invention we further improve upon these two latter proposals by providing that an inset portion lying below the mouth of the well is provided in a separate link part of the band in a composite obstructor element having at least two cylindrical extending band parts articulated together by the link part. This most suitably will be produced by a process such as rolling or extrusion so that it is originally of indefinite length and constant cross-section. The lateral direction of its length will be its longitudinal (circumferential) direction when positioned as part of the obstructor, the part being defined by transverse cuts of the stock of indefinite length. As a result of this the cylindrically extending band parts may be made simply and without need for the cranking operation upon them, and exact symmetricality in the obstructor as a whole may be assured and a single section may, by virtue of being cut to different lengths and at different angles be adapted for use in wells of any one of a plurality of well widths or well sidewall angles. The section is preferably symmetrical about its original longitudinal centre line so that when cut transversely it is immaterial in which circumferential direction it is inserted in the well, the section preferably having at each of its edges of its length (at each of its circumferential ends when cut for use in the band) a claw element for engagement through a window aperture in an outer face of the cylindrically extending band parts. In this case by a simple hooking action the at least three parts of the band may be interengaged together for fitting in the well of the rim.

The cylindrically extending band parts may be also of constant cross-section having, for example, one or more circumferentially extending and radially inwardly directed ribs to form a platform for supporting the cylindrical portion of the cylindrically extending parts of the band at the appropriate distance above the base of the well so that it is in or adjacent to the mouth of the well. Alternatively, lugs either longitudinal or transverse may be provided in the manner which is disclosed in the said U.K. Patent 1488871, to assure at least lateral positioning of the obstructor.

The invention relates to an assembled rim with the obstructor (and possibly a tyre) to the assembled obstructor itself and to the cylindrically extending and link parts thereof.

A particular embodiment of the invention will now be described with reference to the accompanying drawings wherein:—

Fig. 1 shows an assembled obstructor band having two cylindrically extending parts and one link member,

Fig. 2 is a plan view on the arrow II Fig. 1, and includes a section on the line II—II of Fig. 1 showing the positioning of the obstructor in a wheel rim,

Fig. 3 shows in more detail a side view of the link member,

Fig. 4 shows a cross-section analogous to that on the line II—II of Fig. 1 but of a rim and of an obstructor having a different cross-section, and

Fig. 5 is a view on the arrow V, Fig. 1.

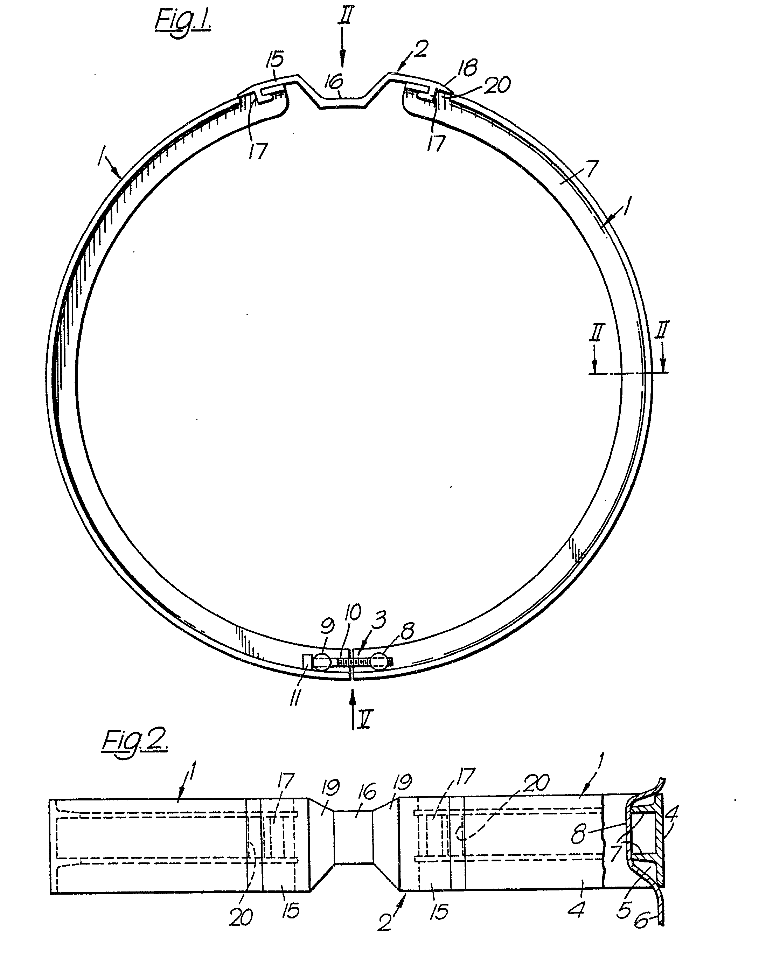

The obstructor as seen in Fig. 1 has three main parts. These are two cylindrically extending parts 1 and a link part 2 which joins them. At one pair of adjacent ends the cylindrically extending parts 1 are joined by retaining means 3 which will be described in more detail later. Each of the parts is inextensible as are also the retaining means.

In this embodiment each of the cylindrically extending parts 1 has a cylindrical portion 4 of which a radially outer surface is to lie substantially flush with or to bridge over the mouth of a well 5 of a wheel rim 6 (see the sectional part of Fig. 2), and has circumferentially extending radially inwardly directed web or webs 7 which are to act as a support platform by bearing on the base 8 of the well of the rim. The disposition of the cylindrical portion 4 in relation to these webs 7 can be varied in accordance with the type of rim in which it is proposed to use the obstructor. As seen in Fig. 4 some rims 6' have wider and more eccentric wells 5' than that seen in Fig. 2 and the band part 4' will accordingly be formed to extend further to one side of the webs 7.

At one pair of adjacent ends the portions 1 are joined by retaining means 3 which have the function of inextensible and positively holding the band parts in position in the rim unless and until released by a conscious act. A desirable arrangement of such retaining means is shown here, deriving from the use of webs 7 as journals for a cylindrical nut 8 and cylindrical rod 9. A screw 10 penetrates the rod 9 through a diametrical bore therein and its stem is freely rotatable and axially slidable in it. A corresponding diametrical bore through cylindrical nut 8 is however screwthreaded and is engaged by the screwthreaded part of the stem of the screw 10 so that appropriate rotation of the screw by for example a screwdriver acting on its head 11 through a slot 12 in one of the portions 1 can draw the cylindrical nut 8 and the cylindrical rod 9 together thereby drawing the adjacent ends of the parts 1 together. No torsional strain will be exerted on those parts as a result of this action since each of the cylindrical elements 8 and 9 is free to rotate in the circular holes which journal it within the respective webs 7.

The other pair of adjacent ends of the cylindrical extending parts are held together by a link part 2. This has when seen in end view the conformation of a shallow divergent sided channel with outwardly extending lips, the whole being arcuate so as to conform with the radius of curvature of the rim in which the obstructor is to be fitted. The outwardly extending lips 15 (Fig. 2) are the same width as the cylindrical portion 4 but the radially innermost part of the link part, which is the base of its channel, is the width of the base 8 of the well 5 into which the element is to fit. This portion 16 can again be best seen from Fig. 2. Each of the outwardly extending lips has below it a backwardly turned claw 17. Beyond this and on the outer face of the lips 15 there is a tapered-off portion 18 which is to merge substantially smoothly with the outer surface of the cylindrical portions 4 of the respective parts 1.

Inclined side walls 19 of the channel of the link portion 2, are cut at an angle (the same or different) such that their edges will conform to the respective inclinations of the side walls of the well 5 into which they are to fit.

It can be seen that the assembly of the obstructor together is simply a matter of hooking the claws 17 through corresponding apertures 20 in the cylindrical portions 4 of the cylindrically extending parts 1 and drawing the parts 1 away until the undercut portions of the claws are engaged and latched under the ends of the portions 4 (the width of the claws 17 and the aperture 20 is equal to the distance between the ribs 7). The parts 1 can now no longer be drawn further apart. The tyre on the rim now having been pushed to one side of the well the band is fitted in the well as described for example in U.K. Patent 1420622 before engagement and tightening of the retaining means 3. The link portion 2 is positioned adjacent the aperture in the side wall of the well which is for the reception of the valve of a tubed tyre. It may be necessary to attach to that valve before fitting a string or other element which is led through the valve aperture before the fitting of the obstructor. After the fitting of the obstructor the valve is drawn through the aperture and the tyre is ready for inflation.

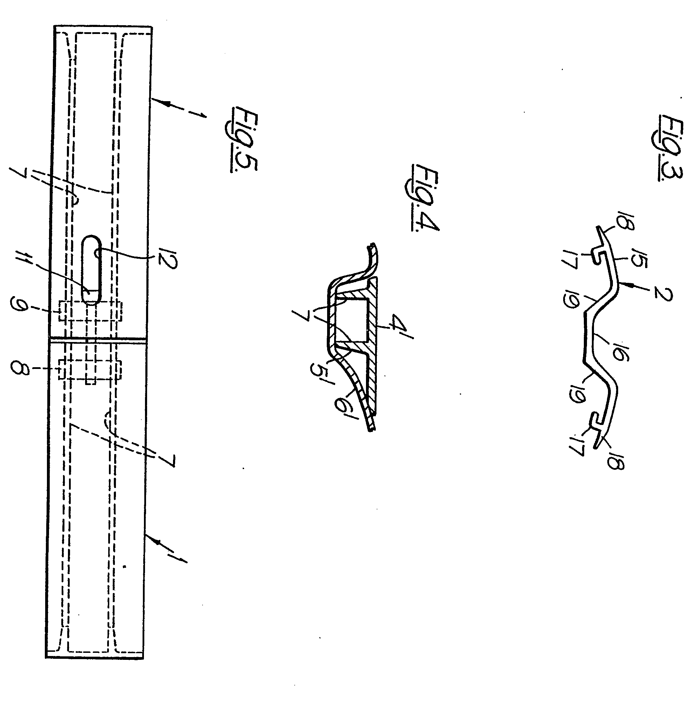

It is most convenient to make the link member 2 as an extrudate of an aluminium alloy or other suitable material. This extrudate is of constant cross-section as seen in Fig. 1 Fig. 3 and is formed to size for a given well by being cut transversely to the longitudinal direction of the extrudate, the width of the extrudate then becoming the circumferential length of the link portion. If the angle of this cut or cuts (i.e. the angle of the cut relative to the vertical if the lateral and longitudinal directions are horizontal) is or are appropriately selected the inclined edges 19 of the inclined side walls may be formed by this cutting operation. Furthermore, the cylindrically extending parts 1 are also of uniform cross-section and may themselves be extrudates of an aluminium alloy or other suitable material.

**Claims**

1. A wheel rim (6) having a circumferentially continuous well (5) between its bead seats and an inextensible obstructor band (1, 2) for the well to be retained by retaining means (3) inextensibly in the well to prevent ingress of a tyre bead into any substantial part of the length of the well (5), the band (1, 2) having a major portion of its circumferential length at the mouth of the well for preventing such ingress including at least two band parts (1) articulated together by a link part (2) characterised in that to permit use of the rim with a tubed tyre the link part (2) provides a minor portion of the length of the band and forms a transverse channel (16) the floor of which lies below the level of the mouth of the well (5) to permit access to a valve aperture in the well (5).

2. A wheel rim according to claim 1 wherein the link part (2) is formed by transverse cuts of stock of constant cross-section.

3. A wheel rim according to claim 2 wherein the cross-section is symmetrical about its longitudinal centre plane.

4. A wheel rim according to claim 1, claim 2 or claim 3 wherein the band parts (1) are formed of stock of constant cross-section.

5. A wheel rim according to claim 2, claim 3 or claim 4 wherein the stock is of an aluminium alloy.

6. A wheel rim according to any one of claims 2 to 5 wherein the stock of constant cross-section is or are extrusions.

7. A wheel rim according to any one of the preceding claims wherein the band parts (1) have a cylindrical portion (4) for positioning at the mouth of the well and a web or webs (7) to extend inwardly into the well (5).

8. A wheel rim according to claim 7 wherein the band parts (1) each have two webs (7) and the retaining means (3) include a screw threaded stem (10) engaging a screw-threaded aperture, the aperture and stem both being borne by members (8, 9) journalled in the two webs (7) to extend between them and be pivotable about their own axes.

9. A wheel rim according to any one of the preceding claims wherein the link part (2) has a hook (17) radially inward at each of its ends to engage with a window (20) in the band parts (1).

10. A wheel rim according to claim 7 or claim 8 wherein the link part has a hook (17) radially inward at each of its ends to engage with a window (20) in the band parts (1), the window (20) lying between and extending substantially the whole distances between two said webs (7) on each band part (1).

11. An obstructor band and link part therefor as defined in any one of the preceding claims.

## Revendications

1. Jante de roue (6) ayant un puits circonférentiellement continu (5) entre ses sièges de bourrelet et une bande d'obstruction inextensible (1, 2) pour le puits à retenir par des moyens de retenue (3) de façon inextensible dans le puits pour empêcher l'entrée d'un bourrelet de pneumatique dans toute partie sensible de la longueur du puits (5), la bande (1, 2) ayant une partie majeure de sa longueur circonférentielle à l'embouchure du puits pour empêcher cette entrée comprenant au moins deux parties de bande (1) articulées l'une à l'autre par une partie de jonction (2), caractérisée en ce que, pour permettre l'utilisation de la jante avec un pneumatique à chambre à air, la partie de jonction (2) forme une partie mineure de la longueur de la bande et forme une gorge transversale (16) dont la base se trouve en dessous du niveau de l'embouchure du puits (5) pour permettre l'accès à une ouverture de valve dans le puits (5).

2. Jante de roue selon la revendication 1, caractérisée en ce que la partie de jonction (2) est formée par des découpes transversales d'un produit de coupe transversale constante.

3. Jante de roue selon la revendication 2, caractérisée en ce que la coupe transversale est symétrique autour de son plan central longitudinal.

4. Jante de roue selon la revendication 1, la revendication 2 ou la revendication 3 où les parties de bande (1) sont formées d'un produit de coupe transversale constante.

5. Jante de roue selon la revendication 2, la revendication 3 ou la revendication 4 où le produit est en un alliage d'aluminium.

6. Jante de roue selon l'une quelconque des revendications 2 à 5 où le produit de coupe transversale constante est ou sont des extrusions.

7. Jante de roue selon l'une quelconque des revendications précédentes où les parties de bande (1) ont une portion cylindrique (4) pour mise en place à l'embouchure du puits et une âme ou des âmes (7) devant s'étendre vers l'intérieur dans le puits (5).

8. Jante de roue selon la revendication 7 où les parties de bande (1) ont chacune deux âmes (7) et les moyens de retenue (3) comprennent une tige filetée (10) engageant une ouverture filetée, l'ouverture et la tige étant toutes deux portées par des organes (8, 9) tourillonnés dans les deux âmes (7) pour s'étendre entre elles et pouvant pivoter autour de leurs propres axes.

9. Jante de roue selon l'une quelconque des revendications précédentes où la partie de jonction (2) a un crochet (17) radialement vers l'intérieur à chacune de ses extrémités pour venir en engagement avec une fenêtre (20) dans les parties de bande (1).

10. Jante de roue selon la revendication 7 ou la revendication 8, où la partie de jonction a un crochet (17) radialement vers l'intérieur à chacune de ses extrémités pour venir en engagement avec une fenêtre (20) dans les parties de bande (1), la fenêtre (20) se trouvant entre et s'étendant sensiblement sur toutes les distances entre les deux âmes (7) sur chaque partie de bande (1).

11. Bande d'obstruction et sa partie de jonction telles que définies selon l'une quelconque des revendications précédentes.

## Patentansprüche

1. Radfelge (6) bzw. Felgenkranz mit einem in Umfangsrichtung verlaufenden, kontinuierlichen Felgenbett (5) zwischen ihren Wulstsitzen, und einem undehnbaren Sperrband (1, 2) für das Felgenbett, das mittels einer Halterungseinrichtung (3) undehnbar im Felgenbett festgehalten ist, um das Eindringen eines Reifenwulstes in einen wesentlichen Abschnitt der Länge des Felgenbettes (5) zu verhindern, wobei das Band, das einen Hauptabschnitt seiner sich in Umfangsrichtung erstreckenden Länge an der Öffnung des Felgenbettes aufweist, um ein solches Eindringen zu verhindern, zumindest zwei Bandabschnitte (1) umfaßt, die mittels eines Verbindungsstücks (2) aneinandergelenkt sind, dadurch gekennzeichnet, daß zur Verwendung der Radfelge mit einem Schlauchreifen das Verbindungsstück (2) einen kleinen Abschnitt der Länge des Bandes darstellt und einen in Querrichtung verlaufenden Kanal (16) bildet, dessen Boden unterhalb der Höhe der Öffnung des Felgenbettes (5) gelegen ist, um den Zugang zu einer Ventilöffnung im Felgenbett (5) zu ermöglichen.

2. Radfelge nach Anspruch 1, dadurch gekennzeichnet, daß das Verbindungsstück (2) aus in Querrichtung verlaufenden Abschnitten von Block- bzw. Stangenmaterial von konstantem Querschnitt hergestellt ist.

3. Radfelge nach Anspruch 1, dadurch gekennzeichnet, daß der Querschnitt symmetrisch um seine in Längsrichtung verlaufende Mittelebene ist.

4. Radfelge nach Anspruch 1, 2 oder 3, dadurch gekennzeichnet, daß die Bandabschnitte (1) aus Block- bzw. Stangenmaterial von konstantem Querschnitt ausgebildet sind.

5. Radfelge nach Anspruch 2, 3 oder 4, dadurch gekennzeichnet, daß das Stangenmaterial aus einer Aluminiumlegierung besteht.

6. Radfelge nach einem der Ansprüche 2 bis 5, dadurch gekennzeichnet, daß das Stangenmaterial von konstantem Querschnitt aus einem oder mehreren Strangpreßteilen besteht.

7. Radfelge nach einem der vorhergehenden Ansprüche, dadurch gekennzeichnet, daß die Bandabschnitte (1), einen zylindrischen Abschnitt (4) für das Instellungbringen an der Öffnung des Felgenbettes und einen Steg oder Stege (7) aufweisen, der (die) sich nach innen in das Felgenbett (5) hinein erstreckt (erstrecken).

8. Radfelge nach Anspruch 7, dadurch gekennzeichnet, daß die Bandabschnitte (1) jeweils mit zwei Stegen (7) versehen sind und die Halterungseinrichtung (3) einen mit Schraubengewinde versehenen Stift (10) umfaßt, der in eine mit Schraubengewinde versehene Öffnung eingreift und daß die Öffnung und der Stift von Beuteilen (8, 9) getragen sind, die in den beiden Stegen (7) gelagert sind, um sich zwischen diesen zu erstrecken und um ihre eigenen Achsen verschwenkbar zu sein.

9. Radfelge nach einem der vorhergehenden Ansprüche, dadurch gekennzeichnet, daß das Verbindungsstück (2) mit einem sich radial nach innen erstreckenden Haken (17) an jedem seiner Enden versehen ist, um in ein Fenster (20) in den Bandabschnitten (1) einzugreifen.

10. Radfelge nach Anspruch 7 oder 8, dadurch gekennzeichnet, daß das Verbindungsstück mit einem sich radial nach innen erstreckenden Haken (17) an jedem seiner Enden versehen ist, um in ein Fenster (20) in den Bandabschnitten (1) einzugreifen, wobei auf jedem der Bandabschnitte (1) das Fenster (20) zwischen den beiden Stegen (7) gelegen ist und sich im wesentlichen über den gesamten Abstand zwischen den Stegen (7) erstreckt.

11. Sperrband und Verbindungsstück hiefür nach einem der vorhergehenden Ansprüche.

Fig.1.

Fig.2.

_Fig.3._

_Fig.4._

_Fig.5._